Europäisches Patentamt

European Patent Office

Office européen des brevets

(19)

(11) Numéro de publication: **0 100 804**
**A1**

## (12) DEMANDE DE BREVET EUROPEEN

(21) Numéro de dépôt: **82401527.5**

(22) Date de dépôt: **12.08.82**

(51) Int. Cl.³: **G 06 F 7/28**
**G 06 F 15/40**

(43) Date de publication de la demande:
**22.02.84 Bulletin 84/8**

(84) Etats contractants désignés:
**AT BE CH DE GB IT LI LU NL SE**

(71) Demandeur: **UNIVERSITE DE BORDEAUX I**
**351 cours de la Libération**
**F-33405 Talence Cedex(FR)**

(72) Inventeur: **Vidalin, Jacques**
**12, rue de Palais des Guilhem**
**F-34000 Montpellier(FR)**

(72) Inventeur: **Aucouturier, Jean, L.**
**73, rue de Loustalot**
**F-33170 Gradignan(FR)**

(74) Mandataire: **Joly, Jean Jacques et al,**
**CABINET BEAU DE LOMENIE 55, rue d'Amsterdam**
**F-75008 Paris(FR)**

(54) Procédé de rapprochement entre des entités logiques de référence et des entités logiques issues d'un fichier.

(57) Chaque ligne de la table de commande 11 comporte des instructions en 1914 relatives à l'exécution des opérations de début et de fin de boucle de séquence qui lui correspondent, ainsi que les instructions correspondant en 1915 à l'enchaînement à exécuter sur la table de commande en fin d'exécution des boucles. On mémorise séparément ou non de la table de commande le nombre correspondant de débuts de boucle en 1301 et de fins de boucle en 1303 à exécuter. Pour chaque séquence, l'exécution de l'instruction correspondant en 1915 à l'enchaînement à exécuter sur la table de commande et commandée par comptage en 1451 et 1453 et combinaison en 141 du nombre de débuts de boucle et de fins de boucle qui ont été exécutés.

EP 0 100 804 A1

./...

Procédé de rapprochement entre des entités logiques de
référence et des entités logiques issues d'un fichier

La présente invention se rapporte à un
procédé de rapprochement entre des entités logiques
de référence et des entités logiques issues d'un fichier.

Un processus de rapprochement itératif
et simultané entre données de référence et données d'un
fichier est décrit dans le brevet français No. 2.293.741
et son certificat d'addition No. 2.330.075.

Un fichier sur lequel un rapprochement
est à effectuer comporte des données, appelées entités
logiques, constituées d'éléments d'information, par
exemple des octets. Les entités logiques sont en longueur fixe ou variable. Dans le second cas, il est nécessaire d'adjoindre à chaque entité logique un caractère spécial indiquant sa fin. Les unités logiques sont
regroupées en séquences identifiées chacune par un
label (ou étiquette, ou titre,....) particulier appelé
entité logique spéciale. Les séquences peuvent être de
longueur fixe ou variable, c'est-à-dire comporter un
nombre fixe ou non d'entités logiques. Dans le second
cas, on adjoint à chaque séquence un caractère spécial
indiquant sa fin.

Un rapprochement itératif et simultané
consiste à reconnaître une relation entre chaque entité
logique spéciale ou non issue de la source et simultanément plusieurs entités logiques de référence. La
relation est, par exemple, une relation d'égalité,
d'inégalité, d'encadrement,.....

A cet effet, on compare chaque entité
logique issue de la source, élément d'information par
élément d'information, avec les entités logiques de
référence précédemment rangées dans des lignes successives d'une table de référence. Ces résultats des comparaisons sont combinés pour fournir le résultat de rapprochement et décider des informations à stocker.
La demande de brevet français No. 79 15701 a pour objet
un procédé de commande permettant d'appliquer le procédé de rapprochement décrit ci-dessus à des informations contenues dans des structures quelconques de fichier tout en travaillant au rythme des informations délivrées par la source, sans repérage externe et tout en commandant l'exécution simultanée des fonctions élémentaires liées aux rapprochements et aux stockages à effectuer, sans interruption du déroulement du fichier. Ces fonctions élémentaires à exécuter simultanément sont relatives à la localisation, au traitement, au transfert des informations issues de la source, aux enchaînements séquentiels des ensembles d'opérations simultanées et aux tests concernant les résultats obtenus sur les précédents rapprochements.

Le procédé de commande objet de la demande FR 79 15 701 comporte essentiellement les étapes suivantes :

(a) on enregistre des entités logiques de référence dans une table de référence en rangeant verticalement, dans des zones horizontales différentes de la table, des entités logiques de types différents, le rangement étant effectué dans l'ordre dans lequel les suites formées chacune d'entités logiques de même type à rapprocher se présentent, non nécessairement de façon consécutive, dans le fichier, chaque zone horizontale de la table contenant des entités logiques de référence de même type rangées elles aussi verticalement par colonnes,

(b) on enregistre dans une mémoire de commande, par ligne :

- des premières informations de commande comportant, d'une part, des informations de commande relatives au rapprochement à effectuer entre des entités logiques de même type du fichier et des entités logiques de référence situées dans une zone horizontale de la table correspondant à la ligne de la mémoire dans laquelle lesdites informations de commande de rapprochement sont enregistrées, et, d'autre part, des informations de commande relatives au stockage d'entités logiques issues du fichier, et

- des secondes informations de commande d'opérations à effectuer à la fin du ou des rapprochements réalisés avec une ou plusieurs entités logiques du fichier et/ou du stockage d'une ou plusieurs entités logiques du fichier, lesdites informations de commande d'opérations comportant des informations de commande de saut pour commander l'enchaînement des traitements à effectuer

(c) on fait défiler le fichier, et

(d) on exécute les opérations correspondant aux premières informations de commande d'une première ligne de la mémoire de commande, puis les opérations correspondant aux secondes informations de commande de cette ligne dont, notamment, l'enchaînement sur une autre ligne non nécessairement consécutive de la mémoire de commande et éventuellement sur une zone horizontale de la table de référence correspondant à cette autre ligne.

Il est également prévu d'enregistrer dans au moins une ligne de la mémoire de commande des informations de commande relatives aux boucles à effectuer pour les traitements correspondant à cette ligne de la mémoire de commande et d'enregistrer dans une mémoire, d'une part, des informations relatives au nombre de boucles à effectuer pour lesdits traitements et, d'autre part, des informations relatives au saut à effectuer dans la mémoire de commande et éventuellement dans la table de référence lorsque ledit nombre de boucles a été effectué. Au cours du défilement du fichier, on compte alors le nombre desdits traitements effectués correspondant à ladite ligne de la mémoire de commande et on exécute les opérations correspondant auxdites informations relatives au saut lorsque le nombre de traitements effectués est égal au nombre de boucles enregistré.

La présente invention a pour objet un procédé de commande de rapprochement du type de celui décrit dans la demande de brevet FR 79 15 701, procédé selon lequel des informations incluses dans les commandes d'enchaînement permettent de commander les traitements répétitifs à exécuter sur des informations en cours de défilement par mémorisation des informations relatives aux débuts et aux fins de boucle de séquence correspondant à chaque ligne de la table de commande, lesdites informations de commande comportant aussi l'instruction correspondant à l'enchaînement à éxécuter en fin d'exécution des boucles.

Une telle mémorisation des points de reprise de début et de fin de boucles présente, en effet, l'avantage de ne pas avoir à développer, pas à pas, comme décrit dans la demande de brevet français No. 79.15701 les enchaînements résultant d'une structure de fichier comportant des boucles imbriquées - et par celà même de faciliter au niveau des fichiers la description des structures d'article dont l'utilisateur confie au système d'exploitation.

La ligne de la table de commande correspondant au début des boucles à exécuter comportera, par exemple, la commande d'enchaînement suivante :

BS c'est-à-dire : "début de boucles de séquence à exécuter".

La ligne de commande correspondant, dans cet exemple, à la fin des boucles enveloppées comportera l'instruction de boucle :

<div align="center">FB C</div>

c'est-à-dire : "fin d'exécution de boucles de séquence et saut au traitement consécutif sur la table de commande".

La ligne de commande correspondant à la fin des boucles enveloppantes comportera, par exemple, l'instruction :

<div align="center">FB FA</div>

c'est-à-dire : "fin d'exécution de boucles de séquence et reprise pour fin d'article".

Pour chaque traitement de la table de commande, sera stocké dans des mémoires spécifiques ou non le nombre total de boucles imbriquées dont le traitement a même origine sur cette table de commande ou le nombre total de boucles dont la fin du traitement correspond à cette ligne de la table de commande.

Les adresses correspondant aux enchaînements de reprise sont stockées séquentiellement, pour les débuts de séquence, au fur et à mesure par ligne dans la mémoire correspondante; et les adresses de saut au traitement consécutif dans la table de commande sont stockées, en fin de la séquence correspondant à la boucle, dans un seul registre par écrasement successif.

Soit, par exemple, 4 boucles enveloppant 3 boucles dont le traitement a même origine sur la table de commande que les 4 boucles enveloppantes, on trouvera par ligne, dans la mémoire spécifique correspondant aux débuts de boucles :

<div align="center">12    x</div>

c'est-à-dire : "exécution de 12 boucles ayant même adresse d'origine x sur la table de commande", et on aura, par ligne, pour la mémoire spécifique correspondant aux fins de boucles :

<div align="center">3<br>4</div>

les adresses y et z correspondant pour chaque fin d'opérations de boucles à un saut au traitement consécutif de la table de commande étant successivement stockées dans un même registre spécifique par écrasement successif, ce qui aura pour signification : "fin d'exécution de 3 boucles et saut à l'adresse y de la table de commande pour traitement consécutif ; puis fin d'exécution de 4 boucles et saut à l'adresse z de la table de commande pour traitement consécutif, sauf exécution d'une reprise pour boucle de fin d'article".

Si les boucles imbriquées avaient eu, non pas une même origine, mais au contraire une même fin sur la table de commande, on aurait eu :

- pour la mémoire spécifique correspondant aux débuts de boucles,

$$4 \quad x$$
$$3 \quad y$$

et pour la mémoire spécifique aux fins de boucles :

$$12 \quad (z)$$

Lorsque le nombre de chacune des boucles à effectuer est fixé, soit par l'utilisateur, soit par le système, et que, de même, l'information dont le traitement est repris par l'opération de bouclage est de longueur également fixée, l'instruction de reprise ou de saut correspondant au traitement de la donnée consécutive de fichiers peut être exécutée automatiquement sans mémorisation de l'adresse. Il n'en est pas de même pour des informations dont le traitement demande un nombre aléatoire de boucles et dont la fin est localisée dans le fichier par la présence d'un ou plusieurs séparateurs. La mémorisation des adresses de la table de commande correpondant à ces fins de boucles et l'instruction de saut pour le traitement de la donnée consécutive permet alors d'appliquer le procédé à des fichiers ou parties de fichiers structurées en longueur variable et comportant un nombre aléatoire de boucles.

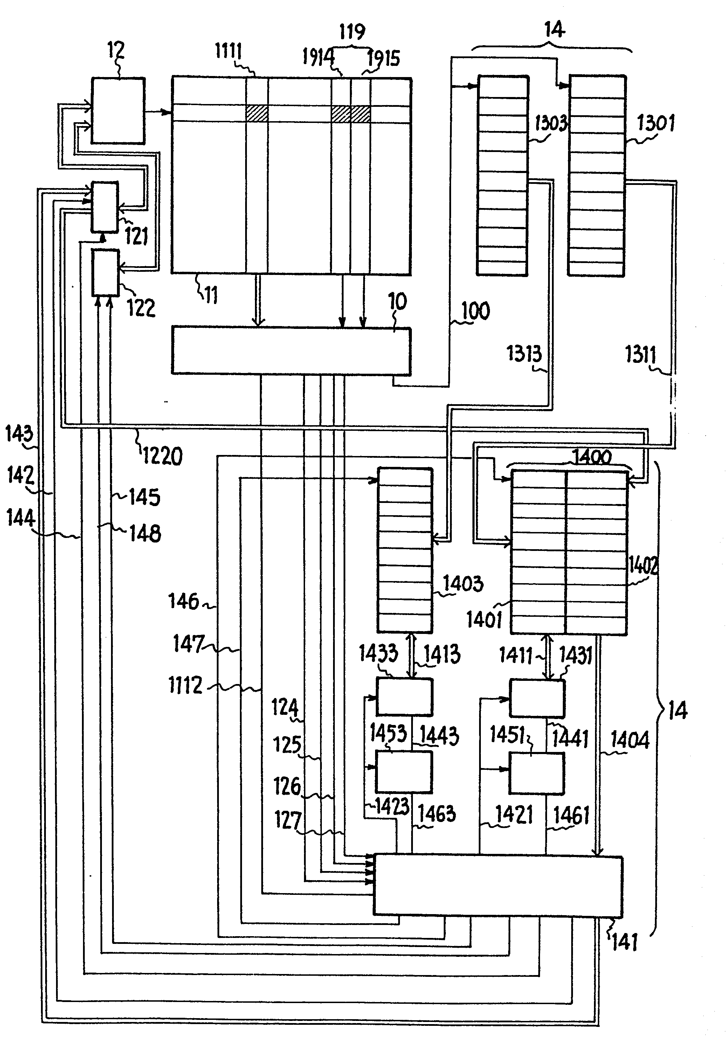

Il est donné, ci-dessous, figure 1, à titre d'exemple, la description d'un dispositif permettant de réaliser l'application particulière ainsi décrite de la présente invention.

Pour une description détaillée de l'ensemble du système de commande, on est prié de se reporter à la demande de brevet français No. 79 15701.

Selon la figure 1, les informations relatives à la déclaration du séparateur de séquence sont rangées dans la case 1111 de la ligne correspondante de la table de commande 11, comme il est dit dans la demande de brevet français susmentionnée No. 79.15701. De même, les instructions relatives aux enchaînements à exécuter sur la table de commande 11 sont rangées dans les cases 1914 et 1915 de la ligne correspondant de cette table de commande 11.

Les cases 1914 contiennent les instructions relatives à l'exécution du début ou de la fin d'une opération de boucle. Les cases 1915 contiennent, pour exécution en fin de ces opérations de boucle, les instructions de reprise au traitement correspondant à une boucle plus enveloppante ou de saut au traitement consécutif pour cette table de commande 11.

Ces instructions sont décodées par le processeur de micro-commande 10, comme il est dit dans la demande de brevet français susmentionnée 79.15701 pour mettre en oeuvre le dispositif de bouclage 14.

Le dispositif de bouclage 14 de la figure 1 comprend :

1. deux mémoires 1301 et 1303 où est chargé par case successivement lors de l'enregistrement du programme ou en cours de traitement par instruction du système, le nombre de boucles correspondant pour le registre 1301 à chaque début et pour le registre 1303 à chaque fin d'une opération de boucle.

2. un double registre à décalage 1400 où, correspondant à une même ligne de la table de commande 11, sont enregistrés par ligne, d'une part, dans la case correspondante 1401 le nombre de boucles restant à effectuer et, d'autre part, dans la case 1402 l'adresse de reprise correspondant à chaque début de boucle dans la table de commande 11.

3. une autre mémoire à décalage 1403 où est enregistré par case pour chaque fin de boucle le nombre correspondant de boucle restant à effectuer.

4. deux registres 121 et 122 pour l'enregistrement des adresses du compteur 12 de la table de commande 11 correspondant pour le registre 121 aux débuts de boucle et pour le registre 122 aux fins de boucle.

5. les compteurs 1451 et 1453.

6. les registres de travail correspondants 1431 et 1433.

7. le décodeur 141.

En début d'article, l'instruction correspondante commande :

- par le décodeur 10 et la liaison 100 la copie simultanée des informations contenues dans les cases de la mémoire 1301 par liaison 1311 dans les cases 1401 de la mémoire 1400 et la copie simultanée des informations contenues dans les cases de la mémoire 1303 par la liaison 1413 dans les cases 1403 de cette mémoire 1400.

- l'initialisation des mémoires 1400 et 1403 et des compteurs 1451 et 1453 aux valeurs correspondant sur les tables 1301 et 1303 à ce début d'article.

Les instructions des débuts de boucle contenues dans les cases 1914 commandent par la liaison 1924 et le décodeur 141 :

- par la commande 144 et la liaison 1220 la copie de l'adresse contenue dans le registre 121 du compteur 12 de la table de commande 11 dans la case correspondante 1402 de la mémoire 1400.

- par l'intermédiaire des liaisons 1411 et 1441 et du registre de travail 1431 la décrémentation du compteur 1451 et la mémorisation du résultat par le registre de travail 1431 dans la même case 1401 de la mémoire 1400

- par la liaison 146, en fin d'exécution du traitement correspondant à la ligne de la table de commande 11 en service, le décalage dans le sens de l'enregistrement de la mémoire 1400.

Les instructions de fin de boucle contenues dans les cases 1914 commandent par la liaison 1925 et le décodeur 141 :

- par la commande 146, en début du traitement à exécuter pour la ligne correspondant à cette fin de boucle dans la table de commande 11, le décalage dans le sens contraire de la mémoire 1400.

- par la commande 145, l'enregistrement dans le registre 122 de l'adresse du compteur 12 de la table de commande 11 correspondant à cette fin de boucle.

- par l'intermédiaire des liaisons 1413 et 1443 et du registre de travail 1433 la décrémentation du compteur 145 et la mémorisation du résultat par le registre de travail 1453 dans la case 1401 de la mémoire 1400.

Les instructions relatives aux enchaînements à effectuer en fin d'exécution des opérations de boucle et correspondant dans les cases 1915 de la mémoire de commande 11 à un saut à exécuter pour le traitement consécutif de la table de commande 11 commande :

- par les liaisons 1926 et 148 l'initialisation du compteur 12 sur la valeur contenue dans le registre 122 pour un résultat égal à 0 donné par la liaison 1463 pour le compteur 1453 et, par conséquent, par la liaison 1461 pour le compteur 1451, ou, par la liaison 1112, pour un résultat VRAI donné pour identification du séparateur contenu dans la case 1111.

- par la liaison 146, le décalage dans le sens de l'enregistrement de la mémoire 1400 et par la liaison 147 le décalage de la mémoire 1403 dans le même sens.

Les instructions relatives aux enchaînements à effectuer en fin d'exécution d'une opération de boucle et correspondant dans les cases 1915 de la mémoire de commande 11 à la reprise du traitement d'une boucle immédiatement enveloppante, commande par l'intermédiaire de la liaison 127 :

- pour un résultat égal à 0 donné par la liaison 1461 pour le compteur 1451 ou, par la liaison 1112, pour un résultat VRAI correspondant à l'indentification du séparateur contenu dans la case 111, et, pour un résultat différent de 0 donné par la liaison 1463 pour le compteur 1453 par la liaison 146, le décalage de la mémoire 1400 dans le sens contraire à celui de l'enregistrement, par la liaison 144, l'initialisation du compteur 12 par la valeur chargée dans le registre 121 par la liaison 143 à partir de la case 1402 correspondante, l'exécution de la reprise correspondante dans la table de commande 11;

- pour un résultat égal à 0 donné par la liaison 1463 pour le compteur 1453 ou, par liaison 1112, pour un résultat VRAI correspondant à l'indentification du séparateur contenu dans la case 1111 et pour un résultat différent de 0 donné par la liaison 1461 pour le compteur 1451, par les liaisons 1926 et 148 l'initilisation du compteur 12 sur la valeur contenue dans le registre 122,

11

par la liaison 146, le décalage dans le sens de
l'enregistrement de la mémoire 1403,
l'exécution du saut correspondant au traitement
consécutif de la table de commande 11.

REVENDICATION

1.          Procédé pour la commande de rapprochements à effectuer entre des entités logiques de référence et des entités logiques issues d'un fichier, procédé selon lequel :

. on enregistre des entités logiques de référence dans une table de référence en rangeant verticalement, dans des zones horizontales différentes de la table, des entités logiques de types différents, le rangement étant effectué dans l'ordre dans lequel les suites formées chacune d'entités logiques de même type à rapprocher se présentent, non nécessairement de façon consécutive, dans le fichier, chaque zone horizontale de la table contenant des entités logiques de référence de même type rangées elles aussi verticalement par colonnes

. on enregistre dans une mémoire de commande, par ligne :

- des premières informations de commande comportant, d'une part, des informations de commande relatives au rapprochement à effectuer entre des entités logiques de même type du fichier et des entités logiques de référence situées dans une zone horizontale de la table correspondant à la ligne de la mémoire dans laquelle lesdites informations de commande de rapprochement sont enregistrées, et d'autre part, des informations de commande relatives au stockage d'entités logiques issues du fichier, et

- des secondes informations de commande d'opérations à effectuer à la fin du ou des rapprochements réalisés avec une ou plusieurs entités logiques du fichier et/ou du stockage d'une ou plusieurs entités logiques du fichier, lesdites informations de commande d'opérations comportant des informations de commande de saut pour commander l'enchaînement des traitements à

0100804

13

effectuer

. on fait défiler le fichier, et

. on exécute les opérations correspondant aux
premières informations de commande d'une première ligne
de la mémoire de commande, puis les opérations correspondant aux secondes informations de commande de cette
ligne dont, notamment, l'enchaînement sur une autre
ligne non nécessairement consécutive de la mémoire de
commande et éventuellement sur une zone horizontale
de la table de référence correspondant à cette autre
ligne,

ledit procédé étant caractérisé en ce que :

a - on enregistre dans chaque ligne de la mémoire de commande les informations signifiant qu'il y a début
et fin de boucle à exécuter, ainsi que les instructions relatives aux enchaînements à effectuer sur ladite mémoire de commande en fin d'exécution des
traitements correspondants ;

b - on mémorise, correspondant à chaque ligne de la table
de commande, les informations relatives au nombre
de débuts ou fins de boucle de séquence à exécuter,
ainsi que les adresses correspondant, pour chaque
boucle de séquence, à la reprise de la même opération de boucle ou au saut à effectuer au traitement
consécutif de la table de commande ;

c - on procède, pour chaque information de début de boucle
de séquence, au comptage desdites opérations de début
de boucle de séquence ;

d - on procède, pour chaque information de fin de boucle
de séquence, au comptage desdites opérations de fin
de boucle de séquence ; et on combine le résultat
des comptages effectués en début et en fin de ladite
boucle avec les informations relatives au nombre
de passages à exécuter en début et en fin de ladite
boucle afin de commander, soit la poursuite de la même opération de boucle, soit - selon les instructions contenues dans la ligne correspondante de la table de commande et relatives aux enchaînements à exécuter en fin de traitement - la reprise de l'opération correspondant à la boucle immédiatement enveloppante ou le saut à effectuer sur la table de commande pour l'exécution correspondant au traitement consécutif.

0100804

Office européen
des brevets

**RAPPORT DE RECHERCHE EUROPEENNE**

Numéro de la demande

EP   82 40 1527

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| D,A | FR-A-2 459 512 (VIDALIN)<br>* Page 17, ligne 7 - page 18, ligne 29; page 21, ligne 21 - page 23, ligne 15 *<br><br>--- | 1 | G 06 F    7/28<br>G 06 F   15/40 |
| A | FR-A-2 373 829 (RCA)<br>* Page 5, ligne 35 - page 6, ligne 34; page 7, ligne 26 - page 8, ligne 31 *<br><br>--- | 1 | |
| A,D | FR-A-2 330 075 (ANVAR)<br><br>--- | 1 | |
| P,X | FR-A-2 499 732 (VIDALIN)<br>* En entier *<br><br>----- | 1 | |

DOMAINES TECHNIQUES
RECHERCHES (Int. Cl. ³)

G 06 F    7/28
G 06 F   15/40
G 06 F    9/32

Le présent rapport de recherche a été établi pour toutes les revendications

| Lieu de la recherche<br>LA HAYE | Date d'achèvement de la recherche<br>21-04-1983 | Examinateur<br>THOMAES K. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82